# EUROPÄISCHE PATENTSCHRIFT

(11) **EP 1 630 716 B1**
(45) Veröffentlichungstag und Bekanntmachung des Hinweises auf die Patenterteilung: **15.08.2007**
(21) Anmeldenummer: 05018322.7
(22) Anmeldetag: 24.08.2005
(51) Int. Cl.: G06K 7/10, B65G 1/137

(54) **Lager**
Storage
Magasin

(30) Priorität: 27.08.2004 DE 102004041491
(43) Veröffentlichungstag der Anmeldung: 01.03.2006
(73) Patentinhaber: Wolter, Michael, 80939 München (DE)
(72) Erfinder: Wolter, Michael, 80939 München (DE)
(74) Vertreter: Grättinger & Partner (GbR)

(56) Entgegenhaltungen:
- WO-A-01/52179
- US-A1- 2002 044 058
- US-A1- 2002 080 031
- US-A1- 2002 167 406

## Beschreibung

Die vorliegende Erfindung betrifft ein Lager mit einem eine Vielzahl von Fächern aufweisenden Lagerregal und einer Einrichtung, die ein Hineingreifen in Fächer des Lagerregals, um diesen Gegenstände zu entnehmen oder diese mit Gegenständen zu bestücken, automatisch erfaßt.

Lager mit einer Vielzahl von Fächern sind in Industriebetrieben insbesondere im Bereich der Endmontage weit verbreitet. In den einzelnen Fächern werden dabei einzelne Bauteile der zu fertigenden Erzeugnisse vorgehalten. Verwendungsmöglichkeiten für solche Lager bestehen jedoch ersichtlich auch in jedwedem sonstigen lagerhaltenden Betrieb, wie z.B. im Versandhandel oder einem sonstigen, ein Ersatzteillager unterhaltenden Betrieb.

Die falsche Bestückung eines Lagerregals in einem produzierenden Betrieb bzw. die Entnahme falscher Bauteile aus dem Lagerregal führt generell zu unnötigen Zeitverlusten bzw. kann im produzierenden Gewerbe aufgrund der Nichtverfügbarkeit der richtigen Bauteile schnell eine Produktionsverzögerung oder gar einen kurzzeitigen Stop eines Produktionsprozesses verursachen. Darüber hinaus führt eine falsche Entnahme eines Artikels oder Bestückung des Lagerregals häufig auch zu falschen Lagerbestands- bzw. Inventurzahlen. Damit einhergehende Produktionsausfälle oder Lieferschwierigkeiten sind häufig mit erheblichen Kosten verbunden, da die verpaßte Produktion bzw. Lieferung häufig entweder gar nicht mehr oder nur mit unverhältnismäßig hohem Kostenaufwand nachgeholt werden kann. Ferner ist das nachträgliche Entfernen eines einmal montierten falschen Bauteils und dessen Austausch gegen ein richtiges Bauteil mit erheblichen Aufwendungen verbunden, von dem Imageschaden für das betreffende Unternehmen, der Gefährdung von dessen Kunden und/oder-dem Aufwand von Rückrufaktionen im Falle der Auslieferung von Erzeugnissen, die aufgrund falscher verwendeter Bauteile fehlerhaft sind, einmal ganz zu schweigen.

Ferner ist die Kontrolle der Entnahme von Teilen aus einem Lagerregal sowie des Bestückens eines Lagerregals mit Waren häufig für die automatisierte Lagerverwaltung eines Unternehmens von großer Bedeutung.

In dem Bewußtsein der Bedeutung der vorstehenden Gesichtspunkte wurden in der Vergangenheit erhebliche Anstrengungen unternommen, um die Gefahr, daß einem Lagerregal falsche Bauteile entnommen werden und/oder daß die Fächer eines Lagerregals mit falschen Bauteilen bestückt werden, zu reduzieren. Verschiedene Ansätze hierzu sehen vor, Lager der eingangs genannten Art einzusetzen, bei denen das jeweilige Lagerregal mit einer Einrichtung zur automatischen Erfassung des Zugriffs auf Fächer des betreffenden Lagerregals ausgestattet ist, wobei insbesondere im Falle eines falschen Zugriffs ein Alarm ausgelöst werden kann.

Ein solches mit technischen Mitteln überwachtes Lagerregal ist beispielsweise aus der EP 994761 B1 bekannt. Die Einrichtung zur automatischen Erfassung des Zugriffs auf Fächer des Lagerregals umfaßt dabei einen optischen Distanzscanner, dessen Meßbereich sich vor der Stirnseite des Regals über eine Mehrzahl von Zugriffsöffnungen erstreckt. Zur Ermittlung des Zugriffs in ein bestimmtes Fach des Regals werden mittels einer Auswerteschaltung die Koordinaten eines von dem optischen Distanzscanner erfaßten Fremdkörpers einerseits und die Koordinaten der Zugriffsöffnungen der überwachten Fächer andererseits miteinander verglichen.

Bei anderen bekannten Lagern der eingangs genannten Art erfolgt die Überwachung der Zugriffsöffnungen der einzelnen Fächer des Lagerregals mittels paarweise an zwei einander gegenüberliegenden Kanten der jeweiligen Zugriffsöffnung angeordneten, an eine Auswerteschaltung angeschlossenen Lichtschrankenelementen.

Um den aktuellen Bestand der jeweils in einem Lagerabschnitt gelagerten Artikel nicht nur in einem zentralen Datenspeicher, sondern vielmehr auch dezentral am jeweiligen Lagerort abrufbar bereitzuhalten, sind gemäß der DE 19651464 A1 bei einem Lager an den einzelnen Lagerabschnitten lokale Datenspeicher vorgesehen. Das Beschreiben der lokalen Datenspeicher, die insbesondere als Teil von beschreibbaren Transpondern ausgeführt sein können, mit den die Menge der gelagerten Artikel betreffenden Daten kann dabei insbesondere dadurch erfolgen, daß ein die Artikel enthaltender, den lokalen Datenspeicher aufweisender Lagerbehälter gewogen wird und die aus dem dabei ermittelten Gewicht berechnete Stückzahl der Artikel bereits während des Wiegevorgangs mittels eines an die Waage und den an diese angeschlossenen zentralen Computer angeschlossenen Schreib-/Lesegeräts auf den Datenspeicher geschrieben wird. Alternativ kann die entnommene Anzahl an Artikeln mittels eines tragbaren Handgeräts, welches ein Schreib-/Lesegerät und einen Computer samt Anzeigeeinrichtung umfaßt, auf den dem betreffenden Lagerabschnitt zugeordneten lokalen Datenspeicher geschrieben werden, ggfs. unter Hinzufügung von Daten zum Entnahmezeitpunkt.

Zum Aufspüren und Überprüfen von bewegbaren Objekten, die zu ihrer Identifizierung mit Transpondern ausgestattet sind, schlägt die WO 03/025834 ein mobiles Transponder-Lesegerät vor. Das mobile Transponder-Lesegerät umfaßt dabei eine erste Sende- und Empfangseinrichtung, die zur Kommunikation mit den eingesetzten Transpondern geeignet ist, und eine zweite Sende- und Empfangseinrichtung zur Übermittlung der Identifizierungsinformation, die über die erste Sende- und Empfangseinrichtung zu dem Transponder des aufgefundenen Objekts empfangenen wurden, von dem mobilen Transponder-Lesegerät an eine Basisstation. Vergleichbare mobile RFID-Lesegeräte zur Identifizierung von mit Transpondern bestückten Gegenständen sind beispielsweise aus der US 2002/0167406 A1 und der US 2002/0044058 A1 bekannt. Nach der US 2002/0167406 A1 können ergänzend zu den einzelnen in einem mehrere Fächer aufweisenden Regal untergebrauchten Gegenständen (z.B. Bücher) auch die Fächer selbst mit Transpondern bestückt sein, um mit Hilfe des mobilen RFID-Lesegeräts überprüfen zu können, ob die einzelnen Gegenstände dem richtigen Fach zugeordnet sind.

Das aus der EP 994761 B1 bekannte Lager mit einer technischen Einrichtung zur Überwachung des Zugriffs auf die einzelnen Fächer des Lagerregals hat sich im praktischen Einsatz bewährt. Allerdings ist es für verschiedene Anwendungen, beispielsweise im Falle von verschiebbaren Lagerregalen, nachteilig, daß das überwachte Lagerregal dieses bekannten Lagers zum Betrieb des optischen Distanzscanners und der Verarbeitung der von diesem ermittelten Daten an ein Versorgungs- bzw. Datennetz angeschlossen sein muß. Auch kann sich die notwendigerweise über die Front des Lagerregals vorstehende Anordnung des Distanzscanners in bestimmten Anwendungsfällen als nachteilig erweisen.

Ausgehend von dem Stand er Technik nach der EP 994761 B1 liegt der vorliegenden Erfindung die Aufgabe zugrunde, ein Lager der eingangs genannten Art bereitzustellen, bei dem die vorstehend im Zusammenhang mit dem Lager nach der EP 994761 B1 beschriebenen Nachteile vermieden werden. Bevorzugt soll das entsprechende Lager dabei besonders benutzerfreundlich sein und eine erweiterte Funktionalität bereitstellen, wobei der Installationsaufwand, auch und gerade im Falle der Umrüstung eines bestehenden, nicht überwachten Lagerregals zu einem technisch überwachten Lagerregal durch Nachrüsten einer Einrichtung zur automatischen Erfassung des Zugriffs auf Fächer des Lagerregals mit geringem Installationsaufwand möglich sein soll.

Diese Aufgabe wird durch ein Lager mit einem eine Vielzahl von Fächern aufweisenden Lagerregal und einer Einrichtung zur automatischen Erfassung des Zugriffs auf Fächer des Lagerregals gelöst, wobei das Lager zur Erfassung des Zugriffs auf Fächer des Lagerregals eine Vielzahl von RFID-Transpondern, die jeweils einem Fach des Lagerregals zugeordnet sind, und ein tragbares elektronisches Gerät, das ein RFID-Lesegerät zur automatischen Identifizierung der den Fächern des Lagerregals zugeordneten RFID-Transponder aufweist, umfaßt, wobei das tragbare elektronische Gerät mit Befestigungsmitteln zu dessen Befestigung am Unterarm, am Handgelenk oder an der Hand einer Person ausgestattet ist und eine zusätzliche Sende- und/oder Empfangseinheit zur drahtlosen Kommunikation mit einer Basisstation mittels eines zweiten, von RFID verschiedenen Übertragungsstandards aufweist.

Als einer der zentralen Bestandteile des erfindungsgemäßen Lagers kann dabei das erfindungsgemäß vorgesehene, über Befestigungsmittel an dem Unterarm, dem Handgelenk oder der Hand eines Benutzers befestigbare tragbare elektronische Gerät angesehen werden, welches einerseits mit den den einzelnen Fächern des Lagerregals fest zugeordneten RFID-Transpondern und andererseits mit einer Basisstation zusammenwirkt. Dieses tragbare elektronische Gerät weist erfindungsgemäß ein RFID-Lesegerät auf, welches sich zum (automatischen) Auslesen der verwendeten RFID-Transponder (häufig auch RFID-Tags genannt), die den einzelnen Fächern des Lagerregals fest zugeordnet sind, eignet. Dabei kommuniziert das RFID-Lesegerät in bekannter Art und Weise mit jeweils einem RFID-Transponder, indem es ein Signal aussendet, das dann von dem betreffenden RFID-Transponder gewissermaßen reflektiert, beantwortet bzw. zurückgesendet wird, wobei das Antwortsignal wieder vom RFID-Lesegerät empfangen wird. Bei der Reflexion, Beantwortung bzw. Zurücksendung des Signals durch den RFID-Transponder wird dem von dem RFID-Lesegerät ausgesendeten Ausgangssignal zur Erzeugung des individuellen Antwortsignals ein für den speziellen RFID-Transponder charakteristisches Signal aufmoduliert, mit dem der entsprechende Transponder identifiziert werden kann. Ein Auslesen eines RFID-Tags funktioniert dabei nur, wenn der Abstand zwischen RFID-Transponder und RFID-Lesegerät die für das Lager typische Lesereichweite nicht übersteigt. Mittels der zusätzlichen Sende- und/oder Empfangseinheit des tragbaren elektronischen Geräts zu dessen drahtloser Kommunikation mit einer Basisstation unter Verwendung eines zweiten, von RFID verschiedenen Übertragungsstandards kann der individuelle, durch das spezifische Antwortsignal des RFID-Transponders definierte Zugriff auf das Lagerregal unmittelbar an die Basisstation gemeldet werden, um dort auf geeignete Weise weiterverarbeitet zu werden.

Die Befestigung des tragbaren elektronischen Geräts im Bereich der Hand des jeweiligen Nutzers gewährleistet, daß die automatische Identifikation eines einem Fach des Lagerregals zugeordneten RFID-Transponders beim Zugriff auf das betreffende Fach bereits durch eine Annäherung der Hand bzw. des Unterarms an das entsprechende Fach des Lagerregals bzw. Hineingreifen in das Fach erfolgt. Dem Träger des tragbaren elektronischen Geräts stehen trotzdem beide Hände für die Arbeit zur Verfügung; er ist damit so gut wie gar nicht in seiner Bewegungsfreiheit eingeschränkt. Bei dem erfindungsgemäßen Lager, bei dem die einzelnen Fächer des Lagerregals mit RFID-Transpondern ausgestattet sind, ist somit möglich, einen einem bestimmten Fach zugeordneten RFID-Transponder beim Zugriff einer das beschriebene tragbare elektronische Gerät tragenden Person auf dieses Fach automatisch auszulesen, um den Zugriff zu erfassen.

Von besonderer Bedeutung erweist es sich darüber hinaus, daß das tragbare elektronische Bauteil eine zweite Sende- und/oder Empfangseinheit aufweist, die auf einem von RFID verschiedenen drahtlosen Übertragungsstandard basiert, die vorteilhaft eine größere Kommunikationsreichweite besitzt und zur uni- oder bidirektionalen Kommunikation mit einer diesem Datenübertragungsstandard entsprechenden Basisstation geeignet ist. Die zugehörige Basisstation wird dazu an einer geeigneten Stelle in Kommunikationsreichweite innerhalb (oder ggfs. auch außerhalb) des Lagers aufgestellt bzw. montiert, wobei je nach Größe des Lagers bzw. je nach Datenübertragungsreichweite auch mehrere entsprechende Basisstationen vorgesehen sein können, um in vorteilhafter Weise eine flächendeckende Kommunikation im gesamten Lager sicherzustellen.

Anders, als dies für viele andere Anwendungen des RFID-Standards gilt, dienen in dem erfindungsgemäßen Lager die RFID-Transponder nicht zur Identifizierung einzelner Bauteile oder einer Person dienen, sondern zur Identifizierung der Fächer eines Lagers, in welchem jeweils bestimmte Bauteile oder sonstige Artikel gelagert sind bzw. gelagert werden sollen. Die logische Zuordnung zwischen den Fächern des Lagers und den darin gelagerten oder zu lagernden Bauteilen kann dabei entweder mittels eines separaten Lagerverwaltungsprogramms, das ggfs. auf einem über die Basisstation drahtlos mit dem tragbaren elektronischen Gerät kommunizierendem EDV-System läuft, erfolgen oder im Falle von RFID-Transpondern mit eigener Speichereinheit (siehe unten) auch direkt in der Speichereinheit des RFID-Transponders hinterlegt sein.

Die Aus- bzw. Nachrüstung eines Lagerregals mit den RFID-Transpondern des erfindungsgemäßen Lagers erfolgt durch Anbringung der jeweiligen RFID-Transponder an geeigneten Stellen in oder an den Fächern des Lagerregals. Bei der genauen Ortswahl für die RFID-Transponder ist in Abhängigkeit von Anordnung und Übertragungs-/Empfangsreichweite des RFID-Lesegeräts (siehe unten) darauf zu achten, daß die RFID-Transponder nur beim Zugriff auf das entsprechende Fach automatisch auslesbar sein sollen; ein nicht beabsichtigtes Auslesen eines nicht diesem Fach zugeordneten RFID-Transponders soll möglichst unterbleiben. Die Anordnung der RFID-Transponder erfolgt daher vorteilhaft innerhalb der Fächer und besonders vorteilhaft in der Tiefe des jeweiligen Faches, d.h. nicht direkt im Bereich der Zugriffsöffnung der Fächer. Dies erweist sich zur Vermeidung eines nicht beabsichtigten Auslesens eines falschen RFID-Transponders als besonders günstig, wobei zusätzlich auch eine Ausgestaltung der Fachtrennwände des Lagers (oder bei Bedarf eine Nachrüstung der Fächer mit entsprechend abschirmenden Matten o.Ä.) aus abschirmendem Material vorteilhaft vorgesehen sein kann. Je nach örtlichen Gegebenheiten, Lesereichweite des RFID-Lesegeräts und Größe der jeweiligen Fächer kann jedoch auch eine Anordnung der RFID-Transponder im Bereich der Zugriffsöffnungen der Fächer sinnvoll sein. Die Erfindung bietet somit eine überaus große Flexibilität in Bezug auf die solchermaßen aus- bzw. nachrüstbaren Lager und verursacht nur einen geringen Montage- bzw. Installationsaufwand, da für die Montage der RFID-Transponder und den Betrieb des tragbaren elektronischen Geräts keine Verkabelung oder ähnliches notwendig ist. Es können sowohl aktive als auch passive RFID-Transponder eingesetzt werden.

Die (mindestens eine) Basisstation ist dabei in vorteilhafter Weise mittels handelsüblicher Netzwerktechnik, ggfs. sogar drahtlos mittels eines u.U. nochmals anderen, dritten Übertragungsstandards, mit einem die Erfassung, Verwaltung und/oder Steuerung (s.u.) der Zugriffe auf die Fächer des Lagerregals durchführenden EDV-System verbunden.

Die zusätzliche Sende- und/oder Empfangseinheit des tragbaren elektronischen Geräts ist gemäß einer vorteilhaften Weiterbildung der Erfindung zum Empfangen von Anweisungen für einen planmäßig durchzuführenden Zugriff und/oder zum Senden von Daten eines erfolgten Zugriffs auf ein Fach des Lagers geeignet. In entsprechender Weise ist in diesem Fall die mindestens eine Basisstation zum Senden von Anweisungen für einen planmäßig durchzuführenden Zugriff und/oder zum Empfangen von Daten eines erfolgten Zugriffs auf ein Fach des Lagers geeignet. Durch die Eignung des Lagers, daß das tragbare elektronische Gerät von der Basisstation Anweisungen für einen planmäßig durchzuführenden Zugriff empfängt, erweitern sich die Möglichkeiten von dem automatischen Erfassen von Zugriffen auf Fächer des Lagerregals auf eine umfassende Verwaltung des Lagers einschließlich der aktuellen direkten Steuerung der durchzuführenden Zugriffe, ggfs. einschließlich detaillierter Informationen wie insbesondere die Anzahl der dem jeweiligen Fach zu entnehmenden Artikel.

Unter einer Anweisung für einen durchzuführenden Zugriff auf ein Fach des Lagers ist dabei eine geeignet codierte Anweisung an den Träger des tragbaren elektronischen Geräts zu verstehen. Ein Beispiel dafür wäre z.B. eine Anweisung, nach der er z.B. "aus Fach 10 fünf Bauteile mit der Bauteilnummer 0015 entnehmen" solle. Zu diesem Zweck verfügt das tragbare elektronische Gerät bevorzugt über eine Ausgabeeinheit für die von der Basisstation an dieses Gerät gerichteten Anweisungen. Bei einer solchen Ausgabeeinheit kann es sich insbesondere um ein zur Anzeige der über den zweiten Übertragungsstandard empfangenen Anweisung geeignetes Display oder eine sonstige optische Ausgabeeinheit handeln; allerdings sind ebenso andere Ausgabeeinheiten wie beispielsweise akustische Ausgabeeinheiten einsetzbar.

Ein Display kann an einem entsprechenden Steckplatz, Erweiterungsschacht oder Port des tragbaren elektronischen Geräts anschließbar sein, so daß es entweder nur bei Bedarf aufgesteckt werden oder als Erweiterungsmodul im Sinne von Sonderzubehör optional vorgesehen sein kann. Es kann ferner in besonders vorteilhafter Weise relativ zu den Befestigungsmitteln dreh-, schwenk- und/oder neigbar ausgestaltet sein, wodurch eine das Gerät benutzende Person jeweils den optimalen Blickwinkel auf das Display individuell, gegebenenfalls in Abhängigkeit von dem Ort der Befestigung des Geräts einstellen kann. Dabei erweist sich insbesondere die Bereitstellung einer Verdrehmöglichkeit des Displays in Displayebene um 180° als vorteilhaft, da damit die Möglichkeit geschaffen wird, daß das Gerät sowohl von einem Rechtshänder an seinem rechten Handgelenk als auch von einem Linkshänder an seinem linken Handgelenk benutzt werden kann.

Unter den Daten eines erfolgten Zugriffs ist eine geeignet codierte Information über Details eines erfolgten Zugriffs zu verstehen, die umgangssprachlich z.B. "Habe aus Fach 10 fünf Bauteile mit der Bauteilnummer 0015 entnommen" lauten könnte oder im Falle einer entsprechenden vorhergehenden Anweisung z.B. nur aus einer Bestätigung des planmäßig erfolgten Zugriffs bestehen könnte. Hierzu kann das tragbare elektronische Gerät insbesondere über von einem Nutzer betätigbare Bedienelemente verfügen, mit denen dieser beispielsweise eine durchgeführte Anweisung quittieren oder die Anzahl der Artikel, die er bei dem automatisch erfaßten Zugriff dem betreffenden Fach des Lagerregals entnommen hat, für eine entsprechende Meldung an die Basisstation eingibt.

Insbesondere beim Einsatz des tragbaren elektronischen Geräts für Inventurzwecke erweist sich dies als vorteilhaft, da der Träger des Geräts dann durch einen kurzen Griff in ein bestimmtes Fach dieses vom RFID-Lesegerät automatisch erkennen lassen kann und schließlich die Stückzahl der darin eingelagerten Bauteile und ggfs. deren Inventur- bzw. Bauteilnummer mittels der Bedienelemente eingeben kann. Vorteilhaft wird dann diese Information mittels des zweiten Übertragungsstandards drahtlos an die Basisstation übertragen, wobei für die Initiierung des Datenversands vorteilhaft eine eigene Sendetaste bzw. Bestätigungstaste als Bedienelement vorgesehen sein kann. Ein solches Bedienelement kann beispielsweise auch dazu dienen, eine planmäßig erfolgte Ausführung einer Anweisung zur Entnahme einer gewissen Anzahl von Bauteilen aus einem bestimmten Fach des Lagers nach der automatischen Erkennung des dem Fach zugeordneten RFID-Transponders durch das RFID-Lesegerät beim Zugriff auf das Fach zu bestätigen und das Senden dieser Bestätigung an die Basisstation zu veranlassen.

Bei dem zweiten Übertragungsstandard der zusätzlichen Sende- und/oder Empfangseinheit handelt es sich vorteilhaft um Bluetooth oder um einen unter den Oberbegriff WLAN fallenden. Bei dem unter dem vorgenannten Oberbegriff WLAN (Wireless Local Area Network) fallenden Übertragungsstandard handelt es sich vorzugsweise um einen unter die Normenfamilie IEE 802.11 fallenden Übertragungsstandard, wie z.B. IEEE 802.11a, IEEE 802.11b oder IEEE 802.11g.

Gemäß einer anderen vorteilhaften Ausgestaltung des erfindungsgemäßen Lagers kann es sich bei dem zweiten Übertragungsstandard der zusätzlichen Sende- und/oder Empfangseinheit um Zigbee handeln. Dieser neue, auf der IEEE-Spezifikation 802. 15. 4 aufbauende Übertragungsstandard zeichnet sich zwar einerseits nur durch eine geringe maximale Datenübertragungsrate aus, ist jedoch andererseits bei einer für diese Anwendung ausreichend großen Reichweite äußerst stromsparend. Insbesondere bei der hier vorgesehenen Verwendung der Sende- und/oder Empfangseinheit in einem tragbaren elektronischen Gerät erweist sich der geringe Energiebedarf des Zigbee-Standards somit als äußerst vorteilhaft, da damit keine besonders hohen Ansprüche an eine das Gerät mit Strom versorgende Batterie (oder Akku o.Ä.) gestellt werden müssen bzw. deren Nutzungsdauer im Vergleich zur Verwendung anderer Übertragungsprotokollen deutlich erhöht werden kann. Die vergleichsweise niedrige Datenübertragungsrate ist in dem tragbaren elektronischen Bauteil des erfindungsgemäßen Lagers nicht unbedingt nachteilig (siehe auch weiter unten), da damit ohnehin keine sonderlich großen Datenmengen übertragen werden müssen. Außerdem kann es sich ebenso vorteilhaft bei dem zweiten Übertragungsstandard auch um eine auf der ebenfalls stromsparenden CSS (Chirp Spread Spectrum)-Technologie beruhende Funkübertragung handeln.

Gemäß einer weiteren vorteilhaften Ausgestaltung des erfindungsgemäßen Lagers ist vorgesehen, daß das tragbare elektronische Gerät über eine optische und/oder akustische Signaleinrichtung verfügt. Damit kann beispielsweise ein bei einem Zugriff auf ein Fach automatisch erfolgtes Auslesen eines RFID-Transponders durch einen Bestätigungston oder eine entsprechende optische Anzeige (z.B. einer LED oder auf einem Display) signalisiert werden bzw. auch ein erfolgreicher Empfang oder ein erfolgreiches Senden von Daten mittels des zweiten Übertragungsstandards angezeigt bzw. akustisch quittiert werden. Außerdem kann damit in vorteilhafter Weise der Träger des elektronischen Geräts durch einen Warnton oder ein entsprechendes optisches Signal über einen (versehentlich) erfolgten Zugriff auf ein falsches Fach, z.B. im Fall einer anderslautenden Anweisung, hingewiesen werden.

Zur Befestigung des tragbaren elektronischen Geräts an Unterarm, Handgelenk oder Hand der das Gerät tragenden Person kann in vorteilhafter Weise vorgesehen sein, daß das tragbare elektronische Gerät in oder an einem Armband oder Handschuh angeordnet ist. Dabei ist in einer weiteren Ausgestaltung vorgesehen, daß die Anordnung des tragbaren elektronischen Geräts in oder an dem Armband oder Handschuh lösbar erfolgt. Dies erweist sich insbesondere aus hygienischer Sicht als äußerst vorteilhaft, da beispielsweise bei einem Schichtwechsel eine weitere Person das elektronische Bauteil von dem bereits zuvor benutzen und evtl. verschwitzten Handschuh oder Armband entfernen und an einem neuem oder eigenem befestigen kann.

Bei Anordnung des tragbaren elektronischen Geräts in oder an einem Handschuh oder Armband erweist es sich zudem als vorteilhaft, wenn dabei zumindest die Antenne des RFID-Lesegeräts zur Anlage am Handrücken einer Person federbelastet vorgespannt ist. Diese leicht vorgespannte Anordnung der Antenne des RFID-Lesegeräts am Handrücken bietet mehrere Vorteile. Einerseits ist durch die Anordnung der Antenne am Handrücken sichergestellt, daß die elektromagnetische Signale aussendende Antenne in unmittelbarer Nähe zu den Fingern der betreffenden Hand angeordnet ist, was im Hinblick auf die Zuverlässigkeit günstig ist. Auch liegt die Antenne nicht direkt am Handgelenk und damit nicht direkt im Bereich der Hauptschlagader am Unterarm an. Dies bietet bereits im Hinblick auf die weit verbreitete Angst vor Elektrosmog, ob diese nun begründet oder unbegründet ist, zumindest psychologische, wenn nicht auch physiologische Vorteile. Und die leichte federbelastete Vorspannung der Antenne gegen den Handrücken stellt sicher, daß die Antenne nicht vom Handrücken abstehen kann und somit für den Träger des Geräts weniger hinderlich ist. Hierbei kann aus oben genannten Gründen vorteilhaft auch vorgesehen sein, ggfs. auch die Antenne der zusätzlichen Sende- und/oder Empfangseinheit in entsprechender Weise anzuordnen, wobei vorteilhaft auch das gesamte RFID-Lesegerät, von der übrigen Elektronik räumlich getrennt, in der vorstehend beschriebenen Weise an dem Handrücken anliegen kann.

Bei einer weiteren vorteilhaften Ausgestaltung des erfindungsgemäßen Lagers weist das tragbare elektronische Gerät eine eigene Speichereinheit auf. In dieser Speichereinheit können dann z.B. eine Vielzahl von eigentlich zur Übertragung mittels des zweiten Übertragungsstandards vorgesehenen Daten (zwischen)gespeichert werden, bevor diese mit der Sendeeinheit an die Basisstation weitergeleitet werden. Insbesondere bei einem langsamen Übertragungsstandard kann damit stets eine schnelle Reaktion des tragbaren elektronischen Geräts sichergestellt werden, wobei die zwischengespeicherten Daten dann später gesendet werden. Au-ßerdem erlaubt diese Ausgestaltung auch das Arbeiten mit dem tragbaren elektronischen Gerät, auch wenn sich der Träger des Geräts kurzzeitig nicht in Empfangsreichweite der Basisstation befindet.

Gemäß einer weiteren vorteilhaften Ausgestaltung des erfindungsgemäßen Lagers kann vorteilhaft vorgesehen sein, daß die Lesereichweite des RFID-Lesegeräts entsprechend den örtlichen Gegebenheiten einstellbar ist. Unter den örtlichen Gegebenheiten ist hierbei insbesondere die Größe der Fächer des Lagers, die mit RFID-Transpondern bestückt werden, zu verstehen. Dabei ist vorteilhaft vorgesehen, daß über eine entsprechende Anpassung der Lesereichweite des RFID-Lesegeräts, die beispielsweise durch eine variabel einstellbare Sendeleistung des RFID-Lesegeräts erreicht werden kann, sichergestellt werden kann, daß beim Zugriff auf ein bestimmtes Fach des Lagers auch wirklich nur ein dieses Fach identifizierender RFID-Transponder ausgelesen wird. Eine Anpassung der Lesereichweite des RFID-Lesegeräts kann dabei auch automatisch erfolgen, indem im Falle des Empfangs von Antwortsignalen mehrerer Transponder die Lesereichweite so weit herabgesetzt wird, bis lediglich ein einziges auswertbares Antwortsignal empfangen wird. Hierdurch wird eine dynamische Modifizierung der Lesereichweite des RFID-Lesegeräts in Abhängigkeit von den örtlichen Gegebenheiten bereitgestellt.

Des weiteren kann in vorteilhafter Weise bei dem erfindungsgemäßen Lager auch vorgesehen sein, daß einem Fach mehrere das Fach identifizierende RFID-Transponder zugeordnet sind. Dies erweist sich insbesondere dann als vorteilhaft, wenn die Größe der Fächer des Lagers oder deren Zugriffsöffnungen stark voneinander abweichen. Bei einem im Vergleich zu anderen Fächern wesentlich größeren Fach können somit mehrere RFID-Transponder verwendet werden, die jeweils geeignet sind, dieses Fach zu identifizieren. Dies wird beispielsweise dadurch ermöglicht, daß es sich bei den entsprechenden Transponder um solche mit einer identischen Identifikationsnummer handelt oder daß in der die Zugriffe erfassenden, verwaltenden und/oder steuernden Software des über die die Basisstation verbundenen EDV-Lagers die Vergabe mehrerer Identifikationsnummern für ein Fach zugelassen ist. Damit kann auch bei einem Fach mit einer im Vergleich zur (eingestellten) Reichweite des Lesegeräts großen Abmessung sichergestellt werden, daß beim Zugriff auf dieses Fach eine automatische Identifikation zumindest eines der RFID-Transponder stattfindet, der dann dem entsprechenden Fach zuordenbar ist.

Außerdem erweist es sich als vorteilhaft, wenn es sich bei den RFID-Transpondern um solche mit einer beschreibbaren Speichereinheit handelt. Um diese Funktionalität eines beschreibbaren Speichers in den RFID-Tags nutzen zu können, muß ersichtlich das RFID-Lesegerät des tragbaren elektronischen Geräts auch zum Beschreiben dieser Speichereinheit geeignet sind.

In der Speichereinheit der den jeweiligen Fächern zugeordneten RFID-Transponder sind dann in vorteilhafter Weise für das jeweilige Fach spezifische und/oder für darin gelagerte oder zu lagernde Bauteile spezifische Daten speicherbar. Bei den bauteilspezifischen Informationen handelt es sich vorteilhaft um die Inventur- oder Artikelnummer der in dem Fach zu lagernden bzw. gelagerten Bauteile, die Stückzahl des jeweiligen aktuellen Bauteilbestands in dem Fach, Informationen über die letzte Entnahme von Bauteilen, Haltbarkeit der in dem Fach gelagerten Bauteile bzw. Waren, oder sonstige einem Bauteil oder dessen Verwendung und/oder Historie kennzeichnenden Eigenschaften.

Die Information über eine Entnahme einer gewissen Anzahl von Bauteilen aus einem bestimmten Fach kann dann vorteilhaft nicht (nur) mittels der Sende-/ Empfangseinheit des zweiten Übertragungsstandards an die dafür vorgesehenen Basisstation übertragen werden, sondern entweder alternativ hierzu oder z.B. in Form der neuen aktualisierten Stückzahl zusätzlich in die Speichereinheit des RFID-Transponders geschrieben werden.

Das erfindungsgemäße Lager kann eine Mehrzahl von tragbaren elektronischen Geräten umfassen. In diesem Falle sind die einzelnen tragbaren elektronischen Geräte für die Basisstation automatisch unterscheidbar und identifizierbar und somit individuell ansteuerbar. Dies gestattet eine eindeutige Zuordnung von Daten zu erfolgten Zugriffen und/oder Anweisungen zu planmäßig durchzuführenden Zugriffen auf Fächer des Lagerregals zu den einzelnen Personen, die das jeweilige tragbare elektronische Gerät tragen.

Lediglich zur Klarstellung sei darauf hingewiesen, daß aus der Erläuterung der vorliegenden Erfindung anhand der Entnahme von Bauteilen aus einem Lagerregal keine Beschränkung auf eine derartige Anwendung abgeleitet werden kann. Vielmehr läßt sich die Erfindung, wie eingangs zum Ausdruck gebracht, im Zusammenhang mit der Lagerung sämtlicher denkbarer Güter einsetzen, und zwar sowohl Entnahmeseitig als auch beschickungsseitig.

Im Folgenden wird ein Ausführungsbeispiel der Erfindung anhand der Zeichnung näher erläutert. Es zeigt
- Fig. 1: eine schematische Darstellung des erfindungsgemäßen Lagers und
- Fig. 2: eine Detailansicht des tragbaren elektronischen Bauteils des erfindungsgemäßen Lagers nach Fig. 1.

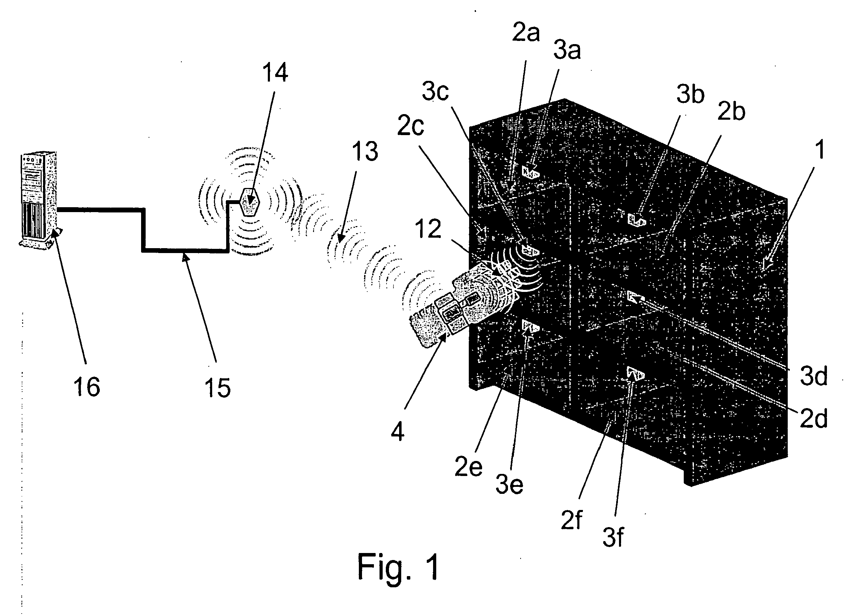

Fig. 1 zeigt ein Lagerregal 1 mit einer Vielzahl von Fächern 2a bis 2f, die manuell mit verschiedenen Bauteilen bestückt bzw. beschickt werden können. Jedem Fach 2a bis 2f des Lagerregals 1 ist genau ein passiver RFID-Transponder 3a bis 3f fest zugeordnet, dessen durch ein RFID-Lesegerät 5 auslesbare Identifikationsnummer somit als Kennzeichen für das jeweilige Fach 2a bis 2f dient. Am Handgelenk einer Person, von der aus Gründen der Übersicht nur ein Teil des Unterarms dargestellt ist, ist ein tragbares elektronisches Gerät 4 angebracht.

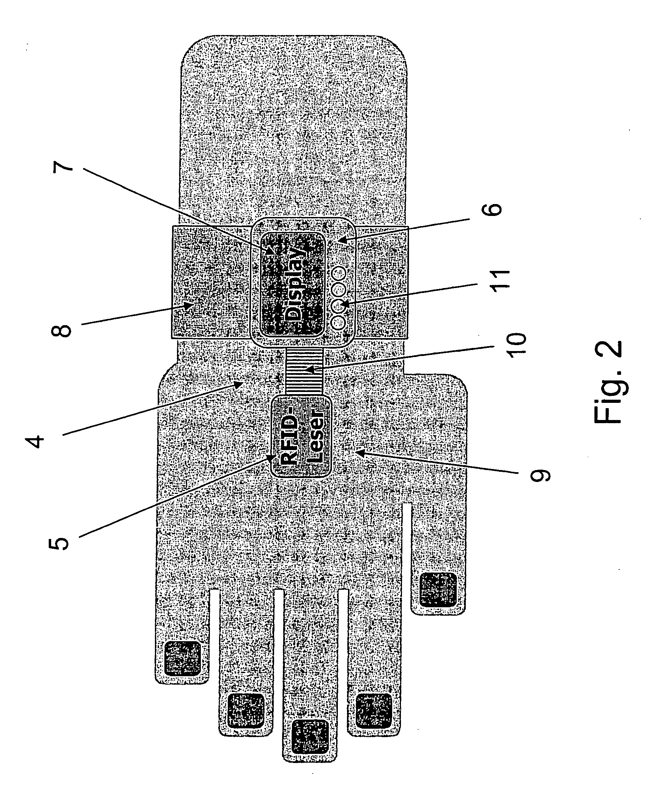

Das in Fig. 2 näher dargestellte tragbare elektronische Gerät 4 weist ein RFID-Lesegerät 5 und eine weitere, in einem Gehäuse 6 untergebrachte Sende- und Empfangseinheit (nicht dargestellt) eines zweiten, von RFID verschiedenen Übertragungsstandards auf. Das Gehäuse 6 des tragbaren elektronischen Geräts 4 ist außerdem mit einem Display 7 ausgestattet, das auf einen nicht dargestellten Port am Gehäuse 6 aufgesteckt ist. Eine symmetrische Form und eine entsprechend symmetrische Ausgestaltung der elektronischen Kontakte erlaubt es, das abgenommene Display 7 nach einer Drehung um 180° in Displayebene wieder dort aufzustecken. Außerdem ist das tragbare elektronische Gerät 4 lösbar an einem Armband 8 angebracht. Das tragbare elektronische Gerät 4 kann demnach vom Armband 8 gelöst und von einer weiteren Person an einem anderen Armband getragen werden. Zudem kann es auch am Unterarm bzw. dem Handgelenk der linken Hand (und nicht wie dargestellt der rechten Hand) bei gleicher Funktionalität angebracht werden. Das RFID-Lesegerät 5 inklusive seiner (nicht dargestellten) Antenne ist mittels einer leicht federbelasteten Verbindung 10, innerhalb derer die Verbindungen des Lesegeräts 5 mit der in dem Gehäuse 6 untergebrachten weiteren Sende- und Empfangseinheit verlaufen, zum Gehäuse 6 gegen den Handrücken 9 vorgespannt. Außerdem verfügt das tragbare elektronische Gerät 4 über vier Bedienelemente in Form von betätigbaren Tasten 11, die gegebenenfalls durch eine unterschiedliche farbige Gestaltung unterschieden werden können. Bei Anordnung des tragbaren elektronischen Geräts 4 am linken Unterarm befinden sich die Bedientasten 11 dann oberhalb des (gedrehten) Displays, was die Funktionalität der Tasten und des Geräts nicht beeinträchtigt.

Bei dem in Fig. 1 dargestellten Zugriff auf das Fach 2c, der mit einer Annäherung des Handgelenks an den in dem entsprechenden Fach 2c angebrachten RFID-Transponder 3c einhergeht, wird die Identifikationsnummer des dem Fach 2c zugeordneten RFID-Transponders 3c automatisch von dem RFID-Lesegerät 5 des tragbaren elektrischen Geräts 4 ausgelesen. Dieser Lesevorgang ist durch schematisch angedeutete elektromagnetische Wellen 12 veranschaulicht.

Das tragbare elektronische Gerät 4 schickt sodann (automatisch) die aus dem RFID-Transponder 3c gewonnene Information mittels der zweiten Sende- und Empfangseinheit drahtlos (durch die schematisch angedeuteten elektromagnetischen Wellen 13 dargestellt) an die Basisstation 14, die zum Senden und Empfangen von (digitalen) Nachrichten des zweiten drahtlosen Übertragungsstandards geeignet ist.

Diese Basisstation 14 ist mittels einer handelsüblichen Netzwerkanbindung 15 mit einem Host 16 eines EDV-Systems zur Lagerverwaltung und -steuerung des Betriebs verbunden, wobei diese Anbindung an den Host 16 insbesondere im Falle mehrerer Basisstationen 14 auch drahtlos, gegebenenfalls mittels eines dritten Übertragungsstands erfolgen könnte.

## Patentansprüche

1. Lager mit einem eine Vielzahl von Fächern (2a bis 2f) aufweisenden Lagerregal (1) und einer Einrichtung, die ein Hineingreifen in Fächer des Lagerregals, um diesen Gegenstände zu entnehmen oder diese mit Gegenständen zu bestücken, automatisch erfaßt, **dadurch gekennzeichnet, daß** die Einrichtung zur Erfassung des Zugriffs auf Fächer des Lagerregals eine Vielzahl von RFID-Transpondern (3a bis 3f), die jeweils einem Fach des Lagerregals zugeordnet sind, und ein tragbares elektronisches Gerät (4), das ein RFID-Lesegerät (5) zur automatischen Identifizierung der den Fächern zugeordneten RFID-Transponder aufweist, umfaßt, wobei das tragbare elektronische Gerät (4) mit Befestigungsmitteln zu dessen Befestigung am Unterarm, am Handgelenk oder an der Hand einer Person ausgestattet ist und eine zusätzliche Sende- und/oder Empfangseinheit zur drahtlosen Kommunikation mit einer Basisstation (14) mittels eines zweiten, von RFID verschiedenen Übertragungsstandards aufweist.

2. Lager nach Anspruch 1,
**dadurch gekennzeichnet,**
**daß** die zusätzliche Sende- und/oder Empfangseinheit des tragbaren elektronischen Geräts (4) geeignet ist, mittels des zweiten Übertragungsstandards Anweisungen von der Basisstation (14) für einen planmäßig durchzuführenden Zugriff zu empfangen und/oder Daten eines erfolgten Zugriffs an die Basisstation zu senden.

3. Lager nach Anspruch 1 oder Anspruch 2,
**dadurch gekennzeichnet,**
**daß** das tragbare elektronische Gerät (4) über eine optische und/oder akustische Signaleinrichtung verfügt.

4. Lager nach einem der Ansprüche 1 bis 3,
**dadurch gekennzeichnet,**
**daß** das tragbare elektronische Gerät (4) ein Display (7) aufweist.

5. Lager nach Anspruch 4,
**dadurch gekennzeichnet,**
**daß** das Display (7) des tragbaren elektronischen Geräts (4) bezogen auf die Befestigungsmittel dreh-, schwenk- und/oder neigbar ist.

6. Lager nach einem der Ansprüche 1 bis 5,
**dadurch gekennzeichnet,**
**daß** das tragbare elektronische Gerät (4) in oder an einem Armband (8) oder Handschuh angeordnet ist.

7. Lager nach Anspruch 6,
**dadurch gekennzeichnet,**
**daß** das tragbare elektronische Gerät (4) lösbar in oder an dem Armband (8) oder Handschuh angeordnet ist.

8. Lager nach einem der Ansprüche 1 bis 7,
**dadurch gekennzeichnet,**
**daß** die Antenne des RFID-Lesegeräts (5) und/oder das RFID-Lesegerät selbst zur federbelastet vorgespannten Anlage am Handrücken (9) einer das tragbare elektronische Gerät tragenden Person ausgeführt ist.

9. Lager nach einem der Ansprüche 1 bis 8,
**dadurch gekennzeichnet,**
**daß** es sich bei dem zweiten Übertragungsstandard der zusätzlichen Sende- und/oder Empfangseinheit um Bluetooth, Zigbee oder einen unter den Oberbegriff WLAN fallenden Übertragungsstandard handelt.

10. Lager nach einem der Ansprüche 1 bis 9,
**dadurch gekennzeichnet,**
**daß** das tragbare elektronische Gerät (4) über von einem Nutzer betätigbare Bedienelemente (11) verfügt.

11. Lager nach einem der Ansprüche 1 bis 10,
**dadurch gekennzeichnet,**
**daß** das tragbare elektronische Gerät (4) eine Speichereinheit aufweist.

12. Lager nach einem der Ansprüche 1 bis 11,
**dadurch gekennzeichnet,**
**daß** die Lesereichweite des RFID-Lesegeräts (5) entsprechend den örtlichen Gegebenheiten einstellbar ist oder sich den örtlichen Gegebenheiten automatisch anpaßt.

13. Lager nach einem der Ansprüche 1 bis 12,
**dadurch gekennzeichnet,**
**daß** einem Fach (2a bis 2f) mehrere das Fach (2a bis 2f) identifizierende RFID-Transponder (3a bis 3f) zugeordnet sind.

14. Lager nach einem der Ansprüche 1 bis 13,
**dadurch gekennzeichnet,**
**daß** die Einrichtung zur Erfassung des Zugriffs auf Fächer des Lagerregals mehrere tragbare elektronische Geräte (4) umfaßt, die automatisch unterscheidbar und identifizierbar sind.

15. Lager nach einem der Ansprüche 1 bis 14,
**dadurch gekennzeichnet,**
**daß** es sich bei den RFID-Transpondern (3a bis 3f) um solche mit einer beschreibbaren Speichereinheit handelt und daß das RFID-Lesegerät (5) des tragbaren elektronischen Geräts (4) zum Beschreiben der Speichereinheiten geeignet ist.

16. Lager nach Anspruch 15,
**dadurch gekennzeichnet,**
**daß** in der Speichereinheit der den jeweiligen Fächern (2a bis 2f) zugeordneten RFID-Transponder (3a bis 3f) für das jeweilige Fach (2a bis 2f) und/oder für darin gelagerte oder zu lagernde Gegenstände spezifische Daten speicherbar sind.

## Claims

1. Stores with a stores shelf (1) comprising a multitude of compartments (2a to 2f) and a means for automatically recording access to said compartments of the stores shelf for extracting objects, or for equipping the same with objects, **characterised in that** the means for recording access to said compartments of the stores shelf comprises a multitude of RFID transponders (3a to 3f), which are each allocated to a compartment of the stores shelf, and a mobile electronic device (4) comprising an RFID reading device (5) for the automatic identification of the RFID transponders located in the compartments, whereby the mobile electronic device (4) is equipped with fitting means for fitting the same to on the lower arm, the wrist, or the hand of a person and comprises an additional transmitting and/or receiving unit for wireless communication with a base station (14) by means of a second transmission standard that is different from RFID.

2. Stores according to Claim 1, **characterised in that** the additional transmitting and/or receiving unit of the mobile electronic device (4) is suited for receiving instructions for planned access to be carried out by means of the second transmission standard and/or for transmitting data relating to access to the base station (14) that has occurred.

3. Stores according to Claim 1 or Claim 2, **characterised in that** the mobile electronic device (4) comprises an optical and/or acoustic signal means.

4. Stores according to one of the Claims 1 to 3, **characterised in that** the mobile electronic device (4) comprises a display (7).

5. Stores according to Claim 4, **characterised in that** the display (7) of the mobile electronic device (4) is rotatable, tiltable, or can be inclined in relation to the fitting means.

6. Stores according to one of the Claims 1 to 5, **characterised in that** the mobile electronic device (4) is located in or on a wrist band (8) or glove.

7. Stores according to Claim 6, **characterised in that** the mobile electronic device (4) is disconnectably located in or on the wrist band (8) or glove.

8. Stores according to one of the Claims 1 to 7, **characterised in that** the aerial of the R-FID reading device (5) and/or the RFID reading device itself is designed for a spring pre-tensioned abutment against the back (9) of the hand of a wearer.

9. Stores according to one of the Claims 1 to 8, **characterised in that** the second transmission standard of the additional transmission and/or receiving unit is a transmission standard that falls under the description of Bluetooth, Zigbee, or the general description WLAN.

10. Stores according to one of the Claims 1 to 9, **characterised in that** the mobile electronic device (4) comprises operating elements (11) to be activated by a user.

11. Stores according to one of the Claims 1 to 10, **characterised in that** the mobile electronic device (4) comprises a memory unit.

12. Stores according to one of the Claims 1 to 11, **characterised in that** the reading range of the RFID reading device (5) can be adjusted to suit local conditions, or **in that** the same automatically adjusts itself to suit local conditions.

13. Stores according to one of the Claims 1 to 12, **characterised in that** several RFID transponders (3a to 3f) identifying a compartment (2a to 2f) are allocated to the same.

14. Stores according to one of the Claims 1 to 13, **characterised in that** the means for recording access to the compartments of the stores shelf comprises several mobile electronic devices (4) which can be automatically differentiated between and identified.

15. Stores according to one of the Claims 1 to 14, **characterised in that** the RFID transponders (3a to 3f) are of the type with a re-writable memory unit, and **in that** the RFID reading device (5) of the mobile electronic device (4) is suitable for writing to the memory units.

16. Stores according to Claim 15, **characterised in that** data relating to the RFID transponder (3a to 3f) allocated to the relevant compartments (2a to 2f) can be stored for the relevant compartment (2a to 2f) and/or for objects stored in, or to be stored in the same can be saved in the memory unit.

## Revendications

1. Magasin comprenant un rayonnage (1), avec une pluralité de cases (2a à 2f), et un dispositif qui détecte de façon automatique le passage des mains dans des cases du rayonnage afin d'y prélever ou déposer des objets, **caractérisé en ce que** le dispositif de détection d'accès à des cases du rayonnage comporte une pluralité de transpondeurs RFID (3a à 3f), qui sont chacun associés à une case du rayonnage, et un appareil électronique (4) portatif qui présente un appareil de lecture RFID (5) pour l'identification automatique des transpondeurs RFID associés aux cases, ledit appareil électronique (4) portatif étant doté de moyens pour le fixer à l'avant-bras, au poignet ou à la main d'une personne et présentant une unité supplémentaire d'émission et/ou de réception pour assurer la communication sans fil avec une station de base (14) à l'aide d'un second standard de transmission qui est différent du standard RFID.

2. Magasin selon la revendication 1, **caractérisé en ce que** l'unité supplémentaire d'émission et/ou de réception de l'appareil électronique (4) portatif est adaptée pour recevoir, via le second standard de transmission, des instruction de la station de base (14) concernant un accès programmé et/ou pour envoyer à la station de base des données concernant un accès effectué.

3. Magasin selon la revendication 1 ou 2, **caractérisé en ce que** l'appareil électronique (4) portatif est doté d'un dispositif de signalisation optique et/ou acoustique.

4. Magasin selon une des revendications 1 à 3, **caractérisé en ce que** l'appareil électronique (4) portatif présente un écran de visualisation (7).

5. Magasin selon la revendication 4, **caractérisé en ce que** l'écran de visualisation (7) de l'appareil électronique (4) portatif peut être tourné, orienté et/ou incliné par rapport aux moyens de fixation.

6. Magasin selon une des revendications 1 à 5, **caractérisé en ce que** l'appareil électronique (4) portatif est disposé dans ou sur un bracelet (8) ou un gant.

7. Magasin selon la revendication 6, **caractérisé en ce que** l'appareil électronique (4) portatif est disposé de façon amovible dans ou sur un bracelet (8) ou un gant.

8. Magasin selon une des revendications 1 à 7, **caractérisé en ce que** l'antenne de l'appareil de lecture RFID (5) et/ou l'appareil de lecture RFID lui-même est conçu(e) pour une application sous précontrainte par ressort contre le dos de la main (9) d'une personne portant l'appareil électronique.

9. Magasin selon une des revendications 1 à 8, **caractérisé en ce que** le second standard de transmission de l'unité supplémentaire d'émission et/ou de réception est la technologie Bluetooth ou Zigbee ou un autre standard de transmission englobé dans le terme générique "WLAN".

10. Magasin selon une des revendications 1 à 9, **caractérisé en ce que** l'appareil électronique (4) portatif est doté d'éléments de commande (11) pouvant être actionnés par un utilisateur.

11. Magasin selon une des revendications 1 à 10, **caractérisé en ce que** l'appareil électronique (4) portatif présente une unité de mémoire.

12. Magasin selon une des revendications 1 à 11, **caractérisé en ce que** la portée de lecture de l'appareil de lecture RFID (5) peut être réglée en fonction des conditions locales ou s'adapte automatiquement aux conditions locales.

13. Magasin selon une des revendications 1 à 12, **caractérisé en ce que** l'on associe à une case (2a à 2f) plusieurs transpondeurs RFID (3a à 3f) identifiant la case (2a à 2f).

14. Magasin selon une des revendications 1 à 13, **caractérisé en ce que** le dispositif de détection d'accès à des cases du rayonnage comprend plusieurs appareils électroniques (4) portatifs qui peuvent être distingués et identifiés de façon automatique.

15. Magasin selon une des revendications 1 à 14, **caractérisé en ce que** les transpondeurs RFID (3a à 3f) sont du type comportant une unité de mémoire pouvant recevoir des écritures, et **en ce que** l'appareil de lecture RFID (5) de l'appareil électronique (4) portatif est adapté pour effectuer l'écriture dans les unités de mémoire.

16. Magasin selon la revendication 15, **caractérisé en ce que** des données spécifiques pour la case concernée (2a à 2f) et/ou pour des objets qui y sont stockés ou doivent y être stockés peuvent être enregistrées dans l'unité de mémoire des transpondeurs RFID (3a à 3f) associés aux cases (2a à 2f) respectives.
